# FASCICULE DE BREVET EUROPEEN

(11) **EP 1 063 122 B1**
(45) Date de publication et mention de la délivrance du brevet: **01.03.2006**
(21) Numéro de dépôt: 99304847.9
(22) Date de dépôt: 21.06.1999
(51) Int. Cl.: B60P 1/64, B62D 53/08

(54) **Dispositif de manutention de conteneur pour le transport routier**
Vorrichtung zur Handhabung eines Behälters für ein Strassenfahrzeug
Container handling device for a road vehicle

(43) Date de publication de la demande: 27.12.2000
(73) Titulaire: Victoria Administration Limited, The Broadway, London NW73TB (GB)
(72) Inventeur: De Kock, Hugo, 3090 Overijse (BE)
(74) Mandataire: Van Straaten, Joop

(56) Documents cités:
- EP-A- 0 358 541
- WO-A-94/15813
- DE-A- 3 010 852
- FR-A- 1 528 767
- FR-A- 2 442 213
- FR-A- 2 460 802
- FR-A- 2 473 965
- GB-A- 1 054 978
- GB-A- 1 371 812
- GB-A- 2 146 974
- US-A- 3 441 158

## Description

L'invention concerne un dispositif à bras pour le halage et la manutention de conteneurs permettant de convertir à volonté un véhicule tracteur de semi-remorque. L'invention concerne également un véhicule tracteur équipé de ce dispositif.

L'industrie du transport est de plus en plus confrontée à une utilisation intensive du matériel. Le recours à des conteneurs est à cet égard significatif car il n'est plus nécessaire d'immobiliser un véhicule complet durant le temps du chargement, comme dans le cas d'un camion à benne ou à ridelles classique. Des dispositifs à bras (tels que décrits par exemple dans EP-358 541 ou GB 1 371 812 conformément au préambule de la revendication 1) permettent de haler, charger et même basculer aisément des conteneurs et des bennes à bord de véhicules de transport.

Il existe par ailleurs des véhicules destinés à la traction de semi-remorques, sensiblement de même puissance et de même gabarit. Ces véhicules sont équipés, à l'arrière, d'une sellette, qui permet une liaison articulée avec une semi-remorque.

Pour des raisons d'encombrement et de résistance mécanique, la présence d'une sellette, est malheureusement incompatible avec celle d'autres équipements.

Diverses tentatives ont été faites néanmoins pour permettre une utilisation polyvalente des véhicules : système de démontage rapide des équipements, portiques de sustentation des équipements, décrits notamment dans EP 0 513 623.

FR 1 528 767 décrit un camion équipé d'une grue de levage et d'une plate-forme rabattable recouvrant une sellette de remorquage, ce qui donne un véhicule de manoeuvre hybride, extrêmement pondéreux et encombrant, peu - voire pas du tout- adapté à la circulation sur les routes.

WO 94/15813 décrit un dispositif à bras et basculeur où une sellette est montée sur le basculeur, ce qui limite les dimensions de la sellette et la charge utile, tant en traction qu'en poids transporté.

On a cherché à développer un dispositif robuste, adaptable sur des châssis de véhicules standards, doté de caractéristiques mécaniques accroissant les possibilités de charge et en traction et qui n'altère pas les qualités routières du véhicule ainsi équipé.

Un autre but de l'invention est que ce dispositif soit maniable de façon à accélérer le transbordement;
Un autre but est que le dispositif n'accroisse pas notablement la tare du véhicule.

L'objet de l'invention est un dispositif de manipulation de conteneur à bras pour véhicule automoteur comprenant un bras de halage pivotant, muni d'un crochet, un basculeur pivotant autour d'un premier axe horizontal et des moyens d'actionnement du dit basculeur. Un châssis comprenant une partie avant soutient un deuxième axe de pivotement. Cet axe de pivotement est situé en avant du point d'appui du véhicule sur son train arrière, et une partie arrière supportant le premier axe horizontal, lequel est décalé vers le bas par rapport au plan supérieur du châssis du véhicule; une biellette est montée à pivotement sur le deuxième axe. Cette biellette supporte à pivotement un bras en L à l'extrémité duquel est monté le crochet. Des moyens d'actionnement sont disposés entre la dite biellette et la base du bras en L.

La hampe du bras en L est mobile par rapport à sa base.

Les proportions respectives du bras secondaire, de la hampe et de la base du bras en L sont telles que le crochet peut aisément saisir un conteneur et le hâler sur le châssis du véhicule.

Le véhicule est, de préférence, muni d'une sellette fixée, d'origine ou non, sur son châssis, l'axe de la sellette étant situé en avant du point d'appui du châssis du véhicule sur son train arrière.

La sellette peut être une sellette de 3 ½" , ce qui augmente considérablement les possibilités de charge et de traction par rapport à une sellette de 2" . On passe ainsi d'une charge classique de 55 tonnes à 110 tonnes.

Suivant un mode de réalisation avantageux, la base du bras en L est articulée par rapport à sa hampe ce qui facilite la manipulation d'une benne.

Suivant un mode de réalisation préféré, la base du bras en L est télescopique, ce qui outre le gain de poids par rapport à la réalisation ci-dessus, a pour avantage supplémentaire de permettre, avec un seul dispositif de base, de manipuler des conteneurs de différentes longueurs et de monter indifféremment le dispositif sur différents types de camions (l'adaptation est possible entre 4,80 m et 5,30 m).

En outre, la durée de vie d'un dispositif de manipulation étant supérieure à celle du véhicule sur lequel il est monté, ce dispositif peut être transféré facilement sur les véhicules successifs d'une flotte, ce qui en accroît la rentabilité.

La section de la base du bras est de préférence trapézoïdale, au contraire d'une section classique, ce qui augmente sa rigidité.

Suivant un mode de réalisation, les parties avant et arrière du châssis du dispositif sont reliées par un longeron surbaissé ne dépassant pas du plan supérieur du châssis du véhicule.

En option, les parties avant et arrière du châssis sont indépendantes et fixées directement sur le châssis du véhicule, ce qui allège considérablement le poids du mécanisme et permet d'augmenter d'autant la charge utile.

De préférence, des moyens de verrouillage d'un conteneur sont disposés sur l'ensemble formé par le basculeur et la biellette.

La sellette est munie, de façon avantageuse, d'un dispositif de verrouillage automatique, notamment pneumatique ou hydraulique, de la cheville ouvrière, ce qui permet au conducteur de l'actionner à distance.

Suivant un mode de réalisation particulier, le basculeur est équipé de rouleaux escamotables vers le bas. Ils sont, par exemple, montés sur un axe pivotant parallèlement au premier axe de pivotement.

Ce basculeur est avantageusement formé à partir d'une tôle, ce qui permet un gain de poids par rapport à une structure en treillis classique et une meilleure protection des organes sous-jacents.

Suivant un mode de réalisation préféré, lorsque le dispositif est en position de repos, le basculeur et ses bras sont disposés à l'extérieur des longerons formant le châssis du véhicule. On obtient ainsi un surbaissement optimal sans que le dispositif empiète pour autant sur le volume du train arrière.

Un autre objet de l'invention est un véhicule automoteur à cabine avant, muni avantageusement d'une sellette montée sur le châssis, qui comprend un dispositif de manipulation tel que décrit ci-dessus.

Un avantage de l'invention est que le dispositif peut être monté directement sur des véhicules déjà équipés de sellettes conventionnelles de tous types.

Un autre avantage est que la sellette reste, sans modification, à une hauteur standardisée (1,35 m) par rapport au sol, ce qui rend les manoeuvres plus faciles pour les conducteurs.

D'autres particularités et avantages de l'invention ressortiront de la description ci-après, référence étant faite aux dessins annexés, dans lesquels :
La Fig. 1 est une vue en perspective d'un dispositif de l'invention monté sur un camion, dans la position de basculement d'un conteneur.
La Fig. 2 est une vue latérale schématique du dispositif de l'invention, monté sur un véhicule utilisé comme tracteur de semi-remorque.
La Fig. 3 est une vue latérale du dispositif monté sur un véhicule, en position de transport d'un conteneur.
La Fig. 4 est une vue en perspective d'un dispositif suivant l'invention représenté en position de basculement.
Les Fig. 5 à 7 sont des vues latérales du dispositif à différents stades d'une manoeuvre de déchargement d'un conteneur.

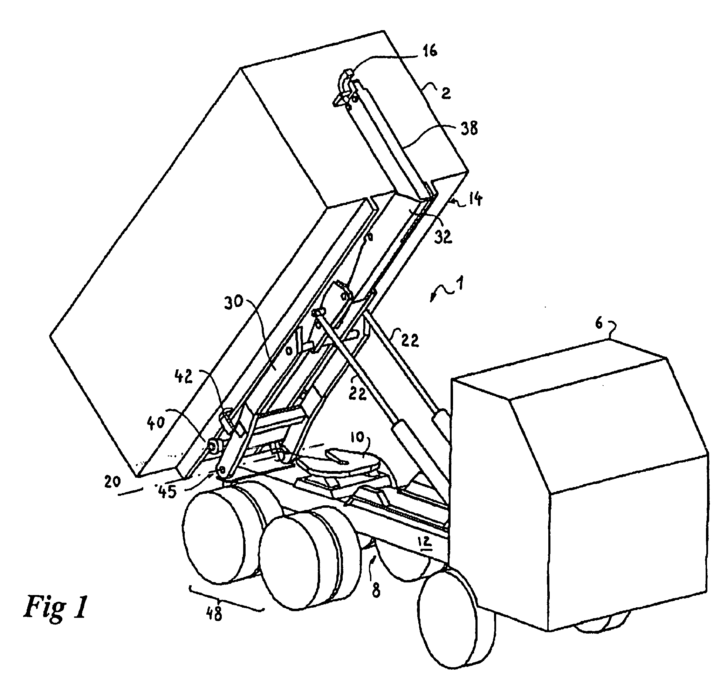

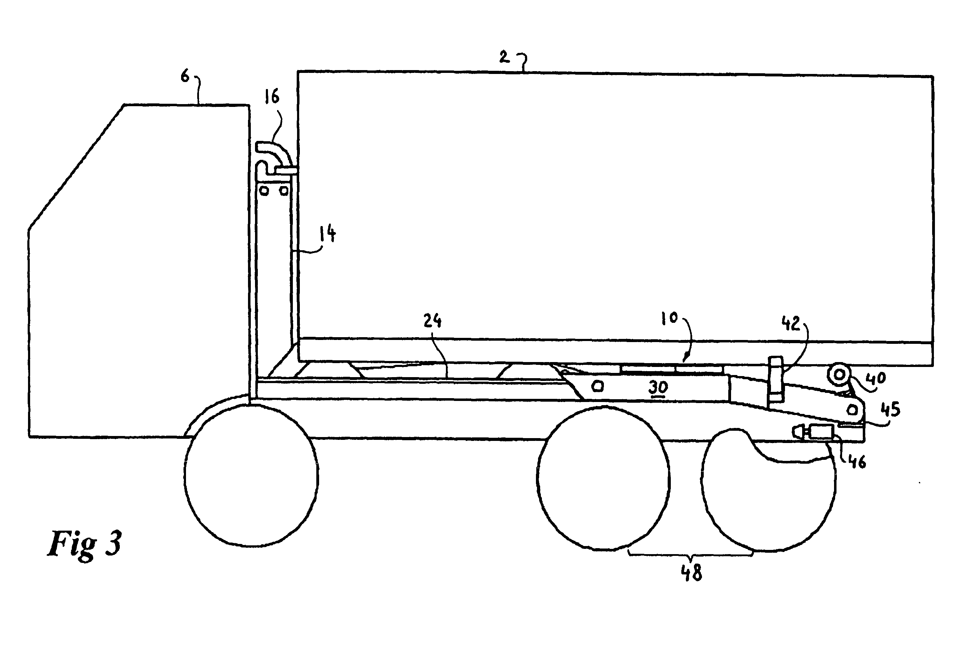

Les Fig. 1 à 3 montrent les différentes possibilités d'emploi d'un véhicule équipé du dispositif suivant l'invention 1, soit comme véhicule de transport et de manutention d'un conteneur 2 (Fig. 1 et 3), avec possibilité de chargement et de basculement (Fig. 1), soit pour la traction d'une semi-remorque 4. Le véhicule de base utilisé peut être tout type de véhicule à cabine avant 6 et châssis arrière 8. Ce véhicule peut être équipé d'origine d'une sellette 10 de remorquage, mais la sellette 10 peut également être ajoutée lors du montage du dispositif 1, voire ultérieurement.

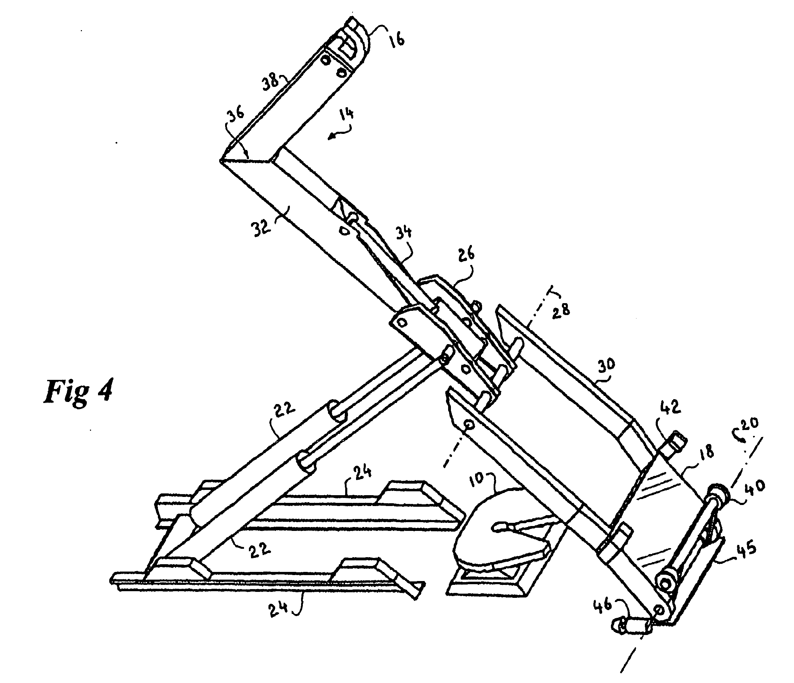

Le dispositif sera décrit par soucis de clarté en se référant plus particulièrement à la Fig. 4, où il est représenté isolé, en position de basculement comme à la Fig. 1. Il va de soi que les différents organes représentés sont normalement fixés sur les longerons 12 du châssis arrière 8 d'un véhicule.

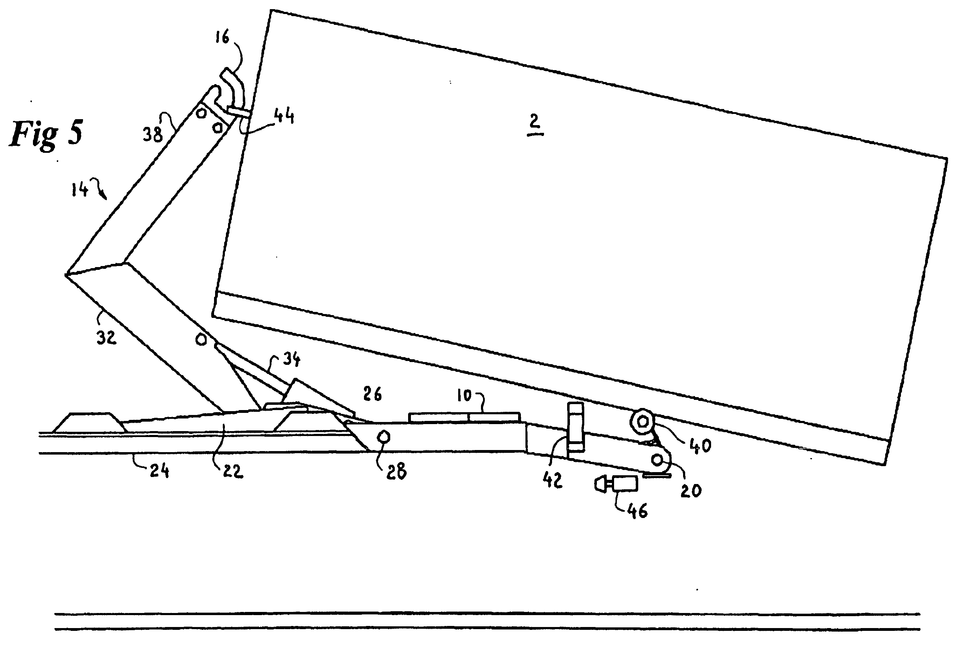

Le dispositif 1 comprend une partie proéminente, le bras de halage 14 qui se termine par un crochet 16. Ce crochet 16 permet de saisir et de manoeuvrer les conteneurs 2 lorsque le bras 14 est ramené vers l'arrière, comme représenté aux Fig. 5 à 7.

Le basculement d'un conteneur chargé est rendu possible par la présence classique d'un châssis basculeur 18 pivotant autour d'un premier axe de pivotement 20.

Le mouvement de basculement s'opère par des puissants moyens de basculement 22, en l'occurrence des vérins 22.

Ces vérins 22 sont montés par leurs extrémités à la partie avant 24 d'un châssis propre au dispositif et s'articulent sur une biellette 26, montée pivotante sur un deuxième axe de pivotement 28, lequel est soutenu par des bras 30 qui prolongent le basculeur 18.

Lorsque le dispositif est au repos, comme montré à la Fig. 3, les bras 30 sont alignés à l'extérieur des longerons 12, sans empiéter sur le volume occupé normalement par la sellette 10. Par ailleurs, leur profil est étudié pour qu'ils ne saillent pas vers le haut, de façon à ne pas gêner les manoeuvres notamment lorsque le véhicule est équipé d'une sellette 10 de remorquage.

La présence d'une sellette 10, dont l'axe doit réglementairement se situer en avant du point d'appui du train de roue arrière du véhicule, poserait à un dispositif de manoeuvre classique un problème de cinématique insoluble. Ce problème ne se pose pas avec le dispositif de l'invention.

Le bras de halage 14 qui soutient le crochet 16 affecte la forme d'un L. La base 32 du L est monté à pivotement à l'extrémité libre de la biellette 26. Un second jeu de vérins 34 (qui comprend ici un vérin unique 34) permet de faire varier la position relative de ces deux organes 26,32. En outre, la base 32 du L comporte une partie télescopique 36, ce qui permet de faire varier sa longueur et ainsi de déplacer la hampe 38 du L, qui soutient le crochet 16.

Le fonctionnement des différents organes est décrit par la succession des figures 3, 5, 6 et 7, qui montrent différentes phases du déchargement d'un conteneur 2.

Le conteneur 2 repose par l'arrière sur des rouleaux-guides 40. Des verrous 42 montés sur l'ensemble formé par le basculeur 18 et la biellette 26 préviennent tout mouvement relatif du conteneur durant le transport.

Après avoir libéré les verrous 42, l'opérateur - généralement le conducteur du véhicule - actionne le vérin 34, ce qui entraîne un pivotement du bras 14, lequel entame le soulèvement de l'avant du conteneur 2.

Le premier jeu de vérins 22 entrant en jeu, la biellette bascule, ce qui amplifie le déplacement du conteneur 2.

Ce dernier se déporte vers l'arrière du véhicule, soutenu et guidé par les rouleaux 40 (Fig. 5).

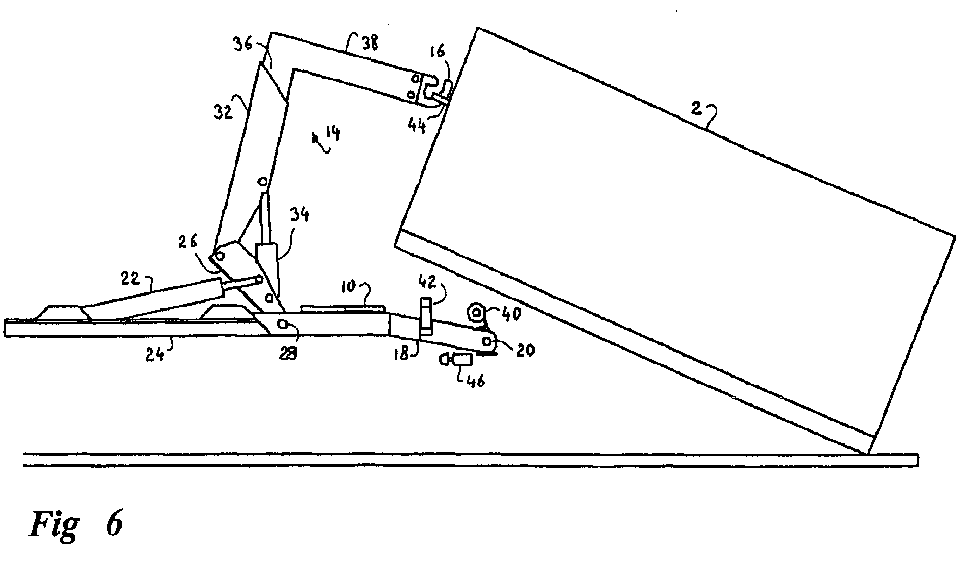

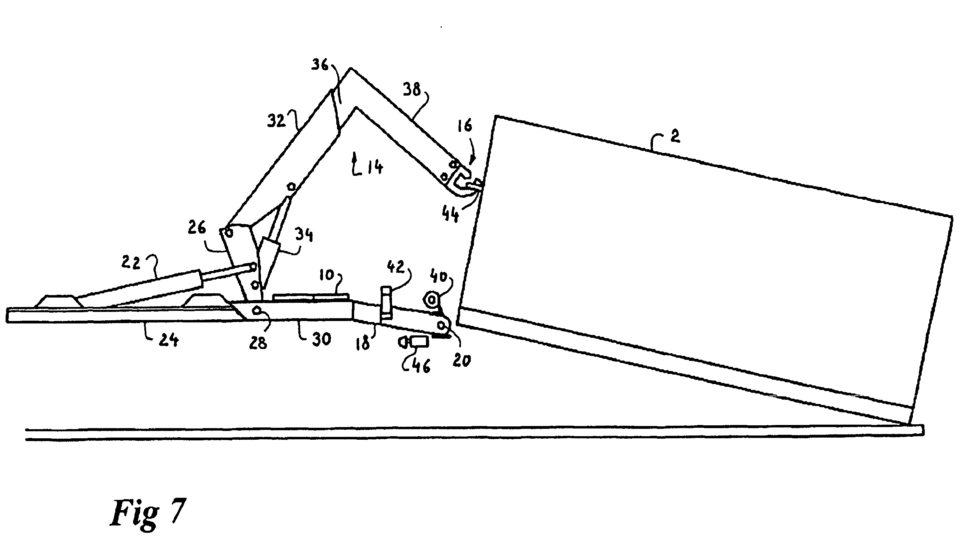

La partie télescopique 36 du bras en L se déploie (Fig. 6) : l'extrémité arrière du conteneur touche le sol. Le contact avec les roulettes 40 est interrompu. Il est impératif que l'avant du conteneur n'accroche pas, à ce moment, l'arrière du véhicule, faute de quoi la poignée 44 pourrait échapper au crochet 16. Pour éviter un tel risque, l'axe de pivotement 20 du basculeur 18 est, dans le présent dispositif, fortement surbaissé par rapport au plan supérieur du châssis original 8 du véhicule. Pour cela, lors du montage, l'extrémité arrière des longerons 12 est entaillée, ce qui représente une opération bénigne, pour fixer un support 45 pour l'axe 20. Le mouvement peut donc être complété sans heurts, comme montré à la Fig. 7. Le chargement d'un conteneur 2 est effectué mutatis mutandis en inversant les opérations décrites ci-dessus.

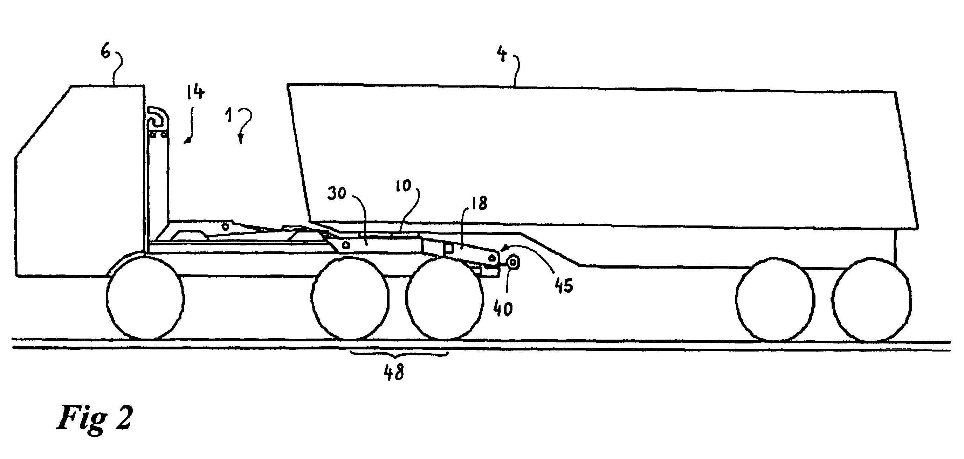

Le déplacement vers le bas de l'axe de pivotement 20 offre l'avantage, lorsque le véhicule est utilisé comme tracteur, d'augmenter le débattement par rapport à une semi-remorque, comme cela est visible à la Fig. 2. Pour accentuer encore cet avantage, sensible notamment quand l'attelage affronte des parcours accidentés ou à fortes dénivellations, les rouleaux 40 sont montés de façon à pouvoir être escamotés vers le bas. En l'occurrence, l'opérateur peut commander via un vérin secondaire le déplacement de l'axe portant ces rouleaux 40 de façon à ce qu'il se range au-dessous du premier axe de pivotement (voir Fig. 2). Cette opération, comme du reste l'ensemble des manoeuvres de déchargement d'un conteneur et l'accrochage d'une semi-remorque, peut être commandé par le conducteur du véhicule sans qu'il soit obligé de quitter sa cabine.

Un mécanisme de blocage d'essieu 46 comprenant un autre vérin secondaire, à axe horizontal, est monté à hauteur du train arrière. Cette disposition entraîne une immobilisation des positions relatives au châssis 8 et du train de roues 48 sans que la tige du vérin de commande soit soumise à un effort direct, avantage non négligeable par rapport aux dispositifs classiques, à axe vertical.

La Fig. 4 montre également une particularité avantageuse du dispositif de l'invention : le basculeur 18 est réalisé non pas de poutrelles entrecroisées, comme dans l'art antérieur, mais à partir d'une tôle rigide. Outre le gain de poids réalisé, un tel basculeur 18 assure une protection efficace en cas de fausse manoeuvre : une semi-remorque 4 éventuellement mal engagé n'y trouve en effet aucun point d'accrochage. La manoeuvre d'accrochage peut être rectifiée et poursuivie sans dommage pour le mécanisme ni pour le véhicule. En outre, les organes délicats (circuit de commande des verrous 42 et des rouleaux escamotables 40) sont efficacement protégés des coups et des intempéries.

Comme il a été dit plus haut, un point essentiel à respecter est que le dispositif 1 n'augmente pas de façon excessive la tare du véhicule. C'est pourquoi, notamment, on fait appel de préférence à un châssis allégé, où les longerons 12 du châssis 8 du véhicule assurent seuls les sollicitations - réduites - entre la partie 24 et l'axe de pivotement 20. Comme précisé plus haut, l'extrémité arrière de ces longerons 8 est retravaillée dans les limites admises par les constructeurs pour obtenir le déport vers le bas de l'axe 20.

Il va de soi que, suivant les souhaits, le dispositif 1 peut parfaitement être muni d'un châssis continu.

Par ailleurs, la présence de la biellette 26 et son articulation par rapport au bras en L entraînent un gain en poids, sensible quoique au premier regard non-évident : du fait de la position avancée de la biellette 26, les vérins 22 reliés à cette biellette 26 développent un couple beaucoup plus efficace, on peut donc réduire leur diamètre (donc leur poids) et leur consommation en fluide comprimé. En utilisant une section trapézoïdale pour la base 32 du bras 14, on peut, à rigidité égale, utiliser des tôles considérablement plus minces, d'où découle également un gain de poids.

## Revendications

1. Un dispositif (1) de manipulation de conteneur (2) pour véhicule automoteur comprenant un bras de halage en L (14) pivotant, muni à son extrémité d'un crochet (16), un basculeur (18) pivotant autour d'un premier axe horizontal (20), des moyens d'actionnement (22) dudit basculeur (18) et des rouleaux de guidage (40) de conteneur (2); le dispositif comprenant en outre
- un châssis comprenant une partie avant (24) et une partie arrière soutenant un deuxième axe de pivotement (28), cet axe de pivotement (28) étant situé en état monté en avant du point d'appui du châssis (8) du véhicule sur son train arrière (48), cette partie arrière supportant le premier axe horizontal (20),
- une biellette (26) montée à pivotement sur le deuxième axe (28), cette biellette (26) supportant, à pivotement, le bras en L (14), des deuxièmes moyens d'actionnement (34) étant disposés entre la dite biellette (26) et la base (32) du bras en L (14), la hampe (38) du bras en L (14) étant mobile par rapport à la base du L (32);
**caractérisé en ce que** le premier axe horizontal (20) est décalé vers le bas par rapport au plan supérieur du châssis (8) du véhicule en état monté.

2. Dispositif de manipulation suivant la revendication 1 **caractérisé en ce qu'**il comprend une sellette (10) apte â être fixée sur le châssis (8) du véhicule, l'axe de la sellette (10) étant situé en état monté en avant du point d'appui du châssis (8) du véhicule sur son train arrière.

3. Dispositif (1) de manipulation suivant l'une des revendications 1 ou 2 **caractérisé en ce que** la base (32) du bras en L (12) est télescopique.

4. Dispositif (1) suivant la revendication 3 **caractérisé en ce que** la base (32) du bras en L (14) présente une section trapézoïdale.

5. Dispositif (1) suivant l'une quelconque des revendications 1 et 2 **caractérisé en ce que** la base (32) du bras en L (14) est articulée par rapport à sa hampe (38).

6. Dispositif suivant l'une quelconque des revendications précédentes **caractérisé en ce que** les parties avant (24) et arrière du châssis du dispositif sont reliées par un longeron surbaissé ne dépassant pas du plan supérieur du châssis (8) du véhicule en état monté.

7. Dispositif suivant l'une quelconque des revendications 1 à 5 **caractérisé en ce que** les parties avant (24) et arrière du châssis sont aptes à être fixées indépendamment l'une de l'autre directement sur le châssis (8) du véhicule.

8. Dispositif suivant l'une quelconque des revendications précédentes **caractérisé en ce que** des moyens de verrouillage (42) d'un conteneur (2) sont disposés sur la partie formée par le basculeur (18) et la biellette (26).

9. Dispositif suivant l'une quelconque des revendications précédentes **caractérisé en ce que** les rouleaux de guidage (40) sont escamotables vers le bas.

10. Dispositif (1) suivant la revendication 2 et l'une quelconque des revendications 3 à 9 **caractérisé en ce que** la sellette (10) est munie d'un dispositif de verrouillage automatique d'une cheville ouvrière.

11. Dispositif (1) suivant l'une quelconque des revendications précédentes, **caractérisé en ce qu'**en état monté, lorsque le dispositif est en position de repos, le basculeur (18) et ses bras (30) sont disposés à l'extérieur des longerons (12) formant le châssis (8) du véhicule.

12. Un véhicule automoteur muni d'une cabine avant (6), d'un chassis (8) et d'un train arrière (48) **caractérisé en ce qu'**il comprend un dispositif de manipulation (1) suivant l'une quelconque des revendications 1 à 12.

## Patentansprüche

1. Vorrichtung (1) zur Handhabung eines Behälters (2) für ein Kraftfahrzeug mit einem schwenkbaren, L-förmigen Schlepparm (14), der an seinem Ende mit einem Haken (16) versehen ist, einer um eine erste horizontale Achse (20) schwenkbaren Kippvorrichtung (18), Mitteln (22) zur Betätigung der Kippvorrichtung (18) und Rollen (40) zur Führung des Behälters (2); wobei die Vorrichtung weiterhin Folgendes umfasst:
- ein Gestell mit einem vorderen Teil (24) und einem hinteren Teil, der eine zweite Schwenkachse (28) stützt, wobei sich diese Schwenkachse (28) im montierten Zustand vor dem Stützpunkt des Gestells (8) des Fahrzeug auf seinem Hinterachsaggregat (48) befindet, wobei dieser hintere Teil die erste horizontale Achse (20) stützt,
- eine schwenkbar an der zweiten Achse (28) angebrachte Schwinge (26), die den L-förmigen Arm (14) schwenkbar stützt, wobei zweite Betätigungsmittel (34) zwischen der Schwinge (26) und der Basis (32) des L-förmigen Arms (14) angeordnet sind und wobei der Schaft (38) des L-förmigen Arms (14) bezüglich der Basis (32) des L beweglich ist;
**dadurch gekennzeichnet, dass**
die erste horizontale Achse (20) im montierten Zustand bezüglich der oberen Ebene des Gestells (8) des Fahrzeugs nach unten hin versetzt ist.

2. Handhabungsvorrichtung nach Anspruch 1, **dadurch gekennzeichnet, dass** sie eine Sattelaufliegerkupplung (10) umfasst, die an dem Gestell (8) des Fahrzeugs befestigt werden kann, wobei sich die Achse der Sattelaufliegerkupplung (10) im montierten Zustand vor dem Stützpunkt des Gestells (8) des Fahrzeugs auf seinem Hinterachsaggregat befindet.

3. Handhabungsvorrichtung (1) nach Anspruch 1 oder 2, **dadurch gekennzeichnet, dass** die Basis (32) des L-förmigen Arms (12) teleskopisch ist.

4. Vorrichtung (1) nach Anspruch 3, **dadurch gekennzeichnet, dass** die Basis (32) des L-förmigen Arms (14) einen trapezförmigen Querschnitt aufweist.

5. Vorrichtung (1) nach einem der Ansprüche 1 und 2, **dadurch gekennzeichnet, dass** die Basis (32) des L-förmigen Arms (14) bezüglich seines Schafts (38) angelenkt ist.

6. Vorrichtung nach einem der vorhergehenden Ansprüche, **dadurch gekennzeichnet, dass** der vordere (24) und der hintere Teil des Gestells der Vorrichtung durch einen tiefliegenden Längsträger miteinander verbunden sind, der im montierten Zustand die obere Ebene des Gestells (8) des Fahrzeugs nicht übertrifft.

7. Vorrichtung nach einem der Ansprüche 1 bis 5, **dadurch gekennzeichnet, dass** der vordere (24) und der hintere Teil des Gestells unabhängig voneinander direkt an dem Gestell (8) des Fahrzeugs befestigt werden können.

8. Vorrichtung nach einem der vorhergehenden Ansprüche, **dadurch gekennzeichnet, dass** Mittel (42) zur Verriegelung eines Behälters (2) an dem durch die Kippvorrichtung (18) und die Schwinge (26) gebildeten Teil angeordnet sind.

9. Vorrichtung nach einem der vorhergehenden Ansprüche, **dadurch gekennzeichnet, dass** die Führungsrollen (40) nach unten klappbar sind.

10. Vorrichtung (1) nach Anspruch 2 und einem der Ansprüche 3 bis 9, **dadurch gekennzeichnet, dass** die Sattelaufliegerkupplung (10) mit einer Vorrichtung zur automatischen Verriegelung eines Sattelzapfens versehen ist.

11. Vorrichtung (1) nach einem der vorhergehenden Ansprüche, **dadurch gekennzeichnet, dass** im montierten Zustand, wenn sich die Vorrichtung in Ruhestellung befindet, die Kippvorrichtung (18) und seine Arme (30) außerhalb der das Gestell (8) des Fahrzeugs bildenden Längsträger (12) befinden.

12. Kraftfahrzeug, das mit einer Frontkabine (6), einem Gestell (8) und einem Hinterachsaggregat (48) versehen ist, **dadurch gekennzeichnet, dass** es eine Handhabungsvorrichtung (1) nach einem der Ansprüche 1 bis 12 umfasst.

## Claims

1. A device (1) for handling a container (2) for an automotive vehicle, comprising a pivoting L-shaped hauling arm (14) equipped, at its end, with a hook (16), a tipper (18) pivoting about a first horizontal axis (20), means (22) for actuating said tipper (18) and rollers (40) for guiding the container (2), said device further comprising
- a chassis comprising a front part (24) and a rear part supporting a second pivot axis (28), this pivot axis (28) being located, in mounted state forward of the point at which the vehicle chassis (8) rests on its rear axle assembly (48), this rear part supporting the first horizontal axis (20)
- a link rod (26) mounted so that it can pivot on the second axis (28), this link rod (26) supporting, with pivoting, the L-shaped arm (14), second actuating means (34) being arranged between the said link rod (26) and the base (32) of the L-shaped arm (14), the hooked part (38) of the L-shaped arm (14) being movable with respect to the base of the L (32), **characterized in that** the first horizontal axis (20) is offset downwards with respect to the upper plane of the vehicle chassis (8) in mounted state.

2. Handling device according to Claim 1, **characterized in that** it comprises a fifth wheel (10) able to be fixed to the vehicle chassis (8), the axis of the fifth wheel (10) being located in mounted state forward of the point at which the vehicle chassis (8) rests on its rear axle assembly.

3. Handling device (1) according to Claim 1 or 2, **characterized in that** the base (32) of the L-shaped arm (12) is telescopic.

4. Device (1) according to Claim 3, **characterized in that** the base (32) of the L-shaped arm (14) has a trapezoidal cross section.

5. Device (1) according to either one of Claims 1 and 2, **characterized in that** the base (32) of the L-shaped arm (14) is articulated with respect to its hooked part (38).

6. Device according to any one of the preceding claims, **characterized in that** the front (24) and rear parts of the chassis of the device are connected by a lowered longeron which, in mounted state, does not protrude above the upper plane of the vehicle chassis (8).

7. Device according to any one of Claims 1 to 5, **characterized in that** the front (24) and rear (45) parts of the chassis are able to be fixed directly to the vehicle chassis (8) independently of one another.

8. Device according to any one of the preceding claims, **characterized in that** means (42) for securing a container (2) are arranged on the part formed by the tipper (18) and the link rod (26).

9. Device according to any one of the preceding claims, **characterized in that** the guiding rollers (40) can be retracted downwards.

10. Device (1) according to claim 2 and any one of claims 3 to 9, **characterized in that** the fifth wheel (10) is equipped with a device for automatically securing a kingpin.

11. Device (1) according to any one of the preceding claims, **characterized in that**, in mounted state, when the device is in a position of rest, the tipper (18) and its arms (30) are arranged on the outside of the longerons (12) that form the vehicle chassis (8).

12. An automotive vehicle equipped with a front cab (6), a chassis (8) and a wheel set (48) **characterized in that** it comprises a handling device (1) according to any one of Claims 1 to 12.
